# EUROPEAN PATENT APPLICATION

(11) **EP 1 022 838 A2**
(43) Date of publication of application: **26.07.2000**
(21) Application number: 00100008.2
(22) Date of filing: 03.01.2000
(51) Int. Cl.: H02J 3/38

(54) **Electric power variation compensating device**

(30) Priority: 22.01.1999 JP 1426899
(71) Applicant: Hitachi, Ltd., Chiyoda-ku, Tokyo 101-8010 (JP); Hitachi Engineering & Services Co., Ltd., Hitachi-shi, Ibaraki 317-0073 (JP)
(72) Inventor: Ichinose, Masaya, Hitachioota-shi, Ibaraki 313-0007 (JP); Futami, Motoo, Hitachioota-shi, Ibaraki 313-0025 (JP); Ueda, Shigeta, Hitachi-shi, Ibaraki 319-1222 (JP); Imaie, Kazuhiro, Hitachi-shi, Ibaraki 316-0032 (JP); Suzuki, Kazuo, Hitachi-shi, Ibaraki 316-0002 (JP); Maekawa, Akira, Hitachi-shi, Ibaraki 319-1222 (JP)
(74) Representative: Strehl Schübel-Hopf & Partner

(57) **Abstract**

A compound system of a wind power generation and an electric power energy storage constituted by a plurality of wind power generators 1a and 1b, and electric power energy storage device 5a and 5b and electric power converters 6a and 6b installed in parallel with the wind power generators is provided with a composite current detecting means 8a for the wind power generators, a voltage detecting means 9a for an electric power system 18, means 8b for detecting a current of which the electric power converters input or output, means 10a for computing output electric powers Pw and Qw of the wind power generators according to the voltage of the electric power system and the detected value of composite current of the wind power generators, means lOb for computing input or output electric powers Pc and Qc of the electric power converters according to the voltage of the electric power system and the detected value of the current of the electric power converters and a control unit lla which generates pulse signals 16a for controlling the electric power converters, wherein the output electric power of the wind power generators and the input or output electric power of the electric power converters are used for electric power feed back in a control system for the electric power converters.

## Description

### BACKGROUND OF THE INVENTION

### 1. FIELD OF THE INVENTION

The present invention relates to an electric power variation compensating device which compensates a variation of an active electric power of wind power (turbine) generators outputted to an electric power system through a control of an electric power converter disposed in parallel with the wind power generators.

### 2. CONVENTIONAL ART

As one of these sorts of conventional devices, Amano et al. "Study on Power Fluctuation Compensation of Wind-Turbine Generators by NAS Battery Systems" (1998 National Convention Record [7] I.E.E. JAPAN, pp 7-310-7-311) discloses a detection of an active electric power outputted from a wind power generation system and a detection of an active electric power inputted or outputted from an electric power energy storage device through separate current and voltage detectors, and further discloses a control of an electric power converter constituting the electric power energy storage device in which a detected value of electric power of the wind power generation system is inputted respectively to a high frequency pass filter and a low frequency pass filter to divide the electric power into long period variation components and short period variation components to perform a phase compensation and a gain calculation for the respective components, and the resultant components are added to a charge and discharge command in the control system of the electric power converter.

As has been explained above, since the respective active electric powers of the wind power generation system and the electric power energy storage system are detected separately in the conventional art, there arises a problem that when installing a plurality of wind power generating systems, detecting points thereof increase.

Further, since the active electric power of the wind power generating system is compensated while dividing the same into long period variation components and short period variation components, it is difficult to compensate all of the variation components with the electric power energy storage system.

Still further, if it is difficult to set the gain of the system at 1 because of a small capacity of the electric power energy storage system, there arises a problem that all of the electric power variation components can not be compensated.

### SUMMARY OF THE INVENTION

An object of the present invention is to provide an electric power variation compensating device which is suitable for suppressing any variation components in an active electric power outputted to an electric power system when an electric power energy storage system is installed in parallel with a plurality of wind power generating systems.

The above object is resolved in the following manner in which the output electric power of the plurality of wind power generators is computed according to a detection value of a composite current and a voltage of an electric power system as well as an input or output electric power of an electric power converter is computed according to the voltage of the electric power system and a detected value of current of the electric power converter or a detected value of current of the electric power system, further an amount of electric power used for electric power feed-back in a control system is one obtained by adding either the active electric power or the reactive electric power in the output electric power of the wind power generators each of which low frequency components are excluded through a low frequency pass filter to either the active electric power or the reactive electric power in the input or output electric power of the electric power converting device, and still further are provided a change-over switch which makes or interrupts the active electric power or the reactive electric power in the output power of the plurality of wind power generators, and another change-over switch which makes or interrupts low frequency components of the active electric power or the reactive electric power in the output electric power of the plurality of wind power generators.

### BRIEF DESCRIPTION OF THE DRAWINGS

Fig. 1 is a block diagram of an electric power variation compensating device representing one embodiment of the present invention;
Fig. 2 is a block diagram showing a detailed structural diagram of a control unit according to the present invention;
Fig. 3 is a diagram for explaining an electric power variation compensation according to the present invention;
Fig. 4 is another diagram for explaining an electric power variation compensation according to the present invention;
Fig. 5 is a diagram for explaining an electric power variation according to a conventional type device;
Fig. 6 is a block diagram of another embodiment of the present invention;
Fig. 7 is a block diagram showing a detailed structural diagram of another control unit in Fig. 6 embodiment of the present invention;
Fig. 8 is a block diagram of a modification example when a superconducting magnetic energy storage device is used as the electric power energy storage device of the present invention;
Fig. 9 is a block diagram of another modification example when a static var compensating device (SVC) is used as the electric power energy storage device of the present invention; and
Fig. 10 is a block diagram of still another modification example when an adjustable speed electric power generating system is used as the electric power energy storage device of the present invention.

### DETAILED DESCRIPTION OF PREFERRED EMBODIMENTS

Hereinbelow, embodiments of the present invention are explained with reference to the drawings.

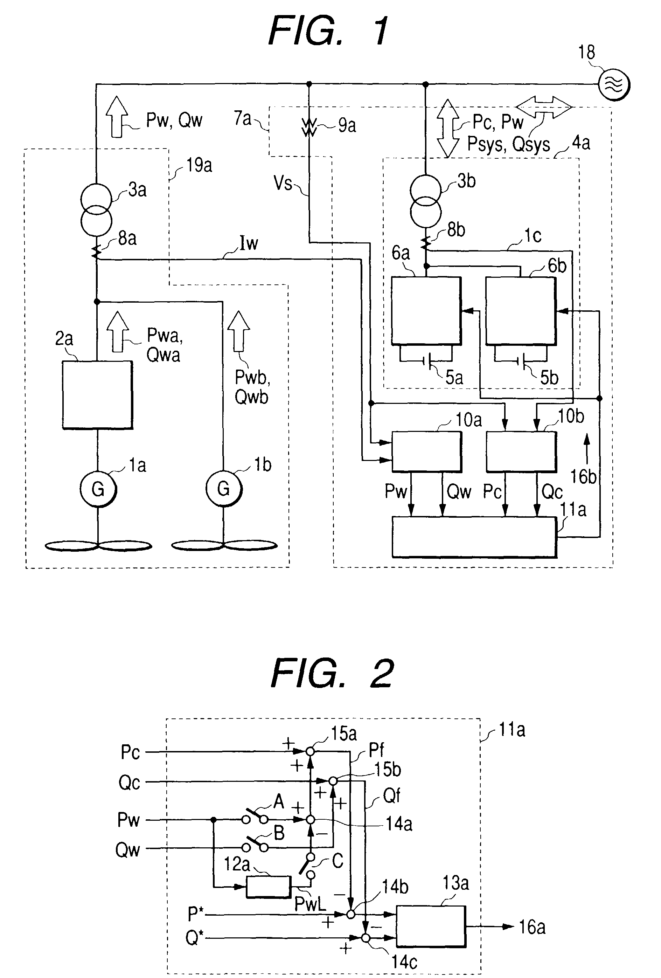

Fig. 1 shows an electric power variation compensating device representing one embodiment of the present invention, in that in Fig. 1, the embodiment is shown which realizes a compound system of a wind power generating system 19a and an electric power energy storage use electric power conversion system 7a according to the present invention.

In Fig. 1, a wind power generator 1a is connected to a coupling use transformer 3a via an inverter/ converter 2a, and the coupling use transformer 3a is connected to an electric power system 18. The inverter/converter 2a once converts an active electric power Pwa outputted from the wind power generator 1a into a DC electric power and then inverts the same into an AC electric power by the inverter to supply the active electric power to the electric power system 18. Further, another wind power generator 1b is connected to the coupling use transformer 3a and an active electric power Pwb outputted from the wind power generator 1b is also supplied to the electric power system 18.

An electric power energy storage device 4a is constituted as an electric power energy storage system by installing secondary batteries 5a and 5b at DC circuit portions of inverters 6a and 6b, and the inverters 6a and 6b are controlled through an inverter control unit 11a and an active electric power Pc from the electric power energy storage device 4a is supplied to the electric power system 18 via a coupling use transformer 3b.

An electric power detector 10a computes, according to an output current Iw of a current detector 8a and an output voltage Vs of a voltage detector 9a, electric powers Pw and Qw outputted from a plurality of wind power generators (in Fig. 1, 1a and 1b) to the electric power system 18. Further, another electric power detector 10b computes, according to an output current Ic of a current detector 8b and the output voltage Vs of the voltage detector 9a, electric powers Pc and Qc inputted or outputted to and from the electric power energy storage device 4a. Thus obtained active electric powers Pw and Pc and reactive electric powers Qw and Qc are inputted to the inverter control unit 11a for the electric power energy storage device 4a.

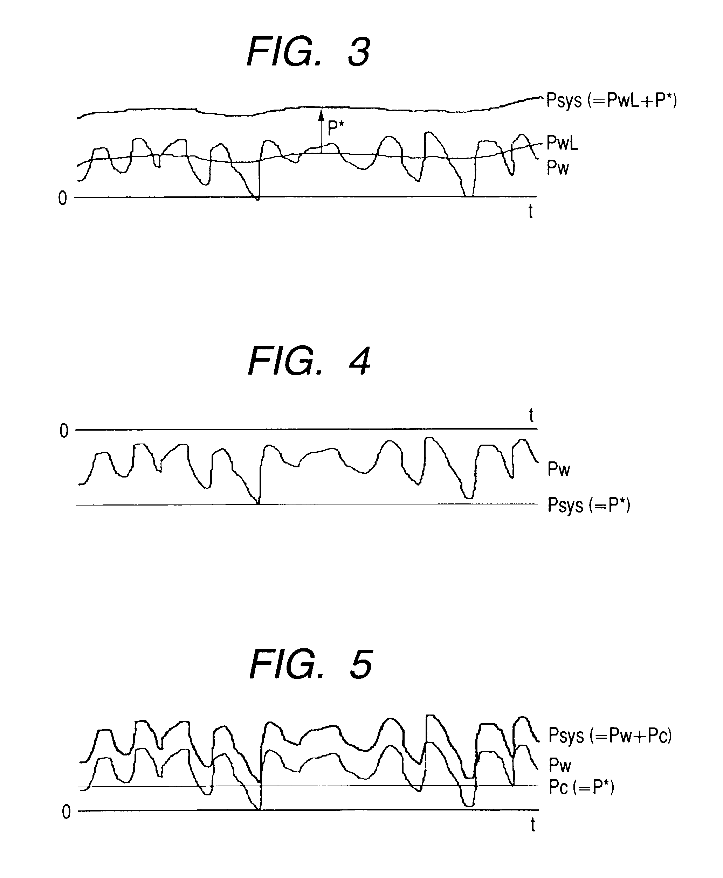

Fig. 2 shows a detailed structure of the inverter control unit 11a for the electric power energy storage device 4a. The composite electric powers Pw and Qw of the plurality of wind power generators 1a and 1b are inputted through respective switches A and B. Further, the active electric power Pw is also inputted into a low frequency pass filter 12a and an output PwL of the low frequency pass filter 12a is inputted into a switch C. The switch C outputs the output PwL to a subtracter 14a. The subtracter 14a computes a difference between the output of the switch A and the output of the switch C and outputs the difference to an adder 15a. The adder 15a adds the output active electric power Pc of the electric power energy storage device 4a and the resultant output of the subtracter 14a, and computes an active electric power feed back value pf, and with another subtracter 14b a difference between an active electric power command p* and the active electric power feed back value pf is computed. Likely, the reactive electric power Qw is inputted via the switch B and another adder 15b adds the reactive electric power Qc inputted into or outputted from the electric power energy storage device 4a and the output from the switch B to compute a reactive electric power feed back value Qf, and with still another subtracter 14c a difference between a reactive electric power command Q* and the reactive electric power feed back value Qf is computed. The outputs of the subtracters 14b and 14c are inputted into a current controller 13a, and from the current controller 13a gate pulses 16a for the converters 6a and 6b are outputted.

When all of the switches A, B and C are ON condition, the active electric power feed back value Pf results in an addition of the active electric power Pc and high frequency components of the composite active electric power Pw. Accordingly, the electric power energy storage device 4a is controlled so that the high frequency components of the active electric power Pw outputted from the wind power generating system 19a are charged/discharged from the batteries 5a and 5b, thereby the high frequency components in the active electric power Pw which otherwise flow out into the electric power system 18 are suppressed.

Now, when assuming that the high frequency components and the low frequency components of the active electric power Pw are as PwH and PwL respectively, since the subtracter 14a subtracts PwL in Pw (PwH, PwL), the output of the subtracter 14a gives Pw (PwH). The adder 15a adds the output Pw (PwH) of the subtracter 14a to the output active electric power Pc of the electric power energy storage device 4a to obtain the active electric power feed back value Pf, namely Pc+Pw (PwH). The subtracter 14b computes a deviation ΔpH between the active electric power command p* and the active electric power feed back value pf. Based on the computed deviation ΔpH the current controller 13a outputs the gate pulses 16a for the converters 6a and 6b. The converters 6a and 6b are controlled so that the high frequency components PwH in the active electric power Pw are charged/discharged into the batteries 5a and 5b. As a result, the high frequency components PwH in the active electric power Pw which possibly flow out into the electric power system 18 are suppressed.

Fig. 3 shows a relationship between the output active electric power Pw of the plurality of wind power generators, the low frequency pass filter output PwL and an active electric power Psys (=PwL+p*) which the compound system of the wind power generation and electric power energy storage outputs into the electric power system 18, when all of the switches A, B and C are in ON condition. Since the electric power energy storage device 4a is operated so that the high frequency components in the active electric power Pw from the wind power generating system 19a are eliminated, the active electric power Psys assumes a value obtained by adding the active electric power command value p* for the electric power energy storage device 4a to the low frequency components PwL in the active electric power Pw. In this instance whether the charging operation or the discharging operation to be performed by the electric power energy storage device 4a, can be determined by varying the active electric power command value p*. With regard to the reactive electric power, since the switch B is ON, the reactive electric power at the coupling point between the wind power generating system 19a and the electric power energy storage device 4a is controlled so as to meet with the command value Q*.

Fig. 4 shows another relationship between the same, when the switch A is ON and the switch C is OFF. In this instance, since the active electric power Pw of the wind power generating system 19a is added to the detected value Pc of the active electric power of the electric power energy storage device 4a, the electric power energy storage device 4a operates so as to charge or discharge all of the varying components in the active electric power. Accordingly, the control unit 11a of the electric power energy storage device 4a operates so as to keep the active electric power of the entire compound system of the wind power generation and electric power energy storage at the constant value p*.

Fig. 5 shows still another relationship between the same, when the switches A and C are OFF which is incidentally an operating example of a conventional type device wherein the output active electric power Pc of the electric power energy storage device 4a and the active electric power Pw of the wind power generating system 19a are controlled separately, therefore, the active electric power Psys represents the addition of the output active electric power Pc and the active electric power Pw.

As has been explained above, through changing-over the switches as shown in Figs. 3 and 4, the active electric power of the compound system of the wind power generation and electric power energy storage is caused to follow up the low frequency components in the active electric power of the wind power generating system to achieve an operating state in which only the high frequency components are compensated or alternatively an operating state in which all of the active electric power components of the wind power generating system are compensated, can be achieved. In particular, when the electric power energy storage device 4a does not have a sufficient capacity which can charge all of the electric power of the wind power generating system 19a, an operation which compensates only the high frequency components through changing over switches is effective.

In the present embodiment, since the electric power of not less than two wind power generators is determined according to the composite current and the voltage of the electric power system 18, one set of detection system is sufficient regardless to the number of wind power generators. Further, when adding one or more wind power generators, it is unnecessary to newly add another detection system.

Further, since the detected value of the active electric power of the wind power generating system of which low frequency pass filter output is subtracted is added to the active electric power feed back value of the electric power energy storage device, the high frequency components in the active electric power which otherwise flow out into the electric power system are absorbed by the electric power energy storage device and varying components in the active electric power which will be outputted into the electric power system can be suppressed.

Still further, since the switches are provided on the transmission lines of the detected values of electric power of the wind power generators and of the low frequency pass filter so as to permit change-over, it is possible to cause to follow up the active electric power of the compound system of the wind power generation and electric power energy storage to the low frequency components as well as to cause to perform a compensating operation for all of the active electric power components of the wind power generating system.

Now, other embodiments of the present invention will be explained hereinbelow. Throughout the respective drawings equivalent constituting elements as in the previous embodiment are designated by the same reference numerals and their explanation is omitted.

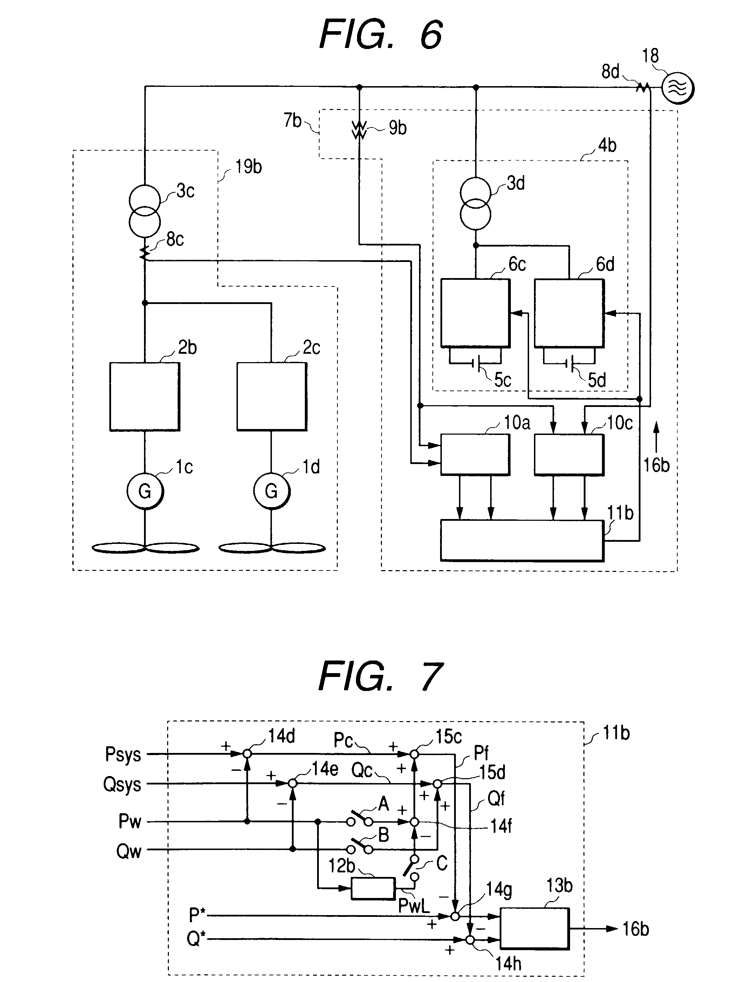

Fig. 6 is another embodiment according to the present invention which realizes a compound system of a wind power generating system and an electric power energy storage use electric power converting system.

The present embodiment is different from Fig. 1 embodiment in the following points, in that in place of the current detector 8b of the electric power energy storage system 7a in Fig. 1 embodiment, the current in the electric power system 18 is detected by a current detector 8d, and the electric powers Psys and Qsys in the electric power system 18 and the detected values Pw and Qw of the electric power of the wind power generating system 19b are fed back to a control unit 11b constituting an electric power energy storage system 7b.

Fig. 7 shows a detailed structure of the control unit 11b of the present embodiment. Since the electric powers Psys and Qsys in the electric power system 18 are respectively subtracted by the electric powers Pw and Qw at subtracters 14d and 14e, the outputs of the subtracters 14d and 14e respectively give the active electric power Pc and the reactive power Qc which are inputted or outputted to and from an electric power energy storage device 4b.

With the present embodiment, substantially the same advantages as has been obtained by Fig. 1 embodiment are also obtained.

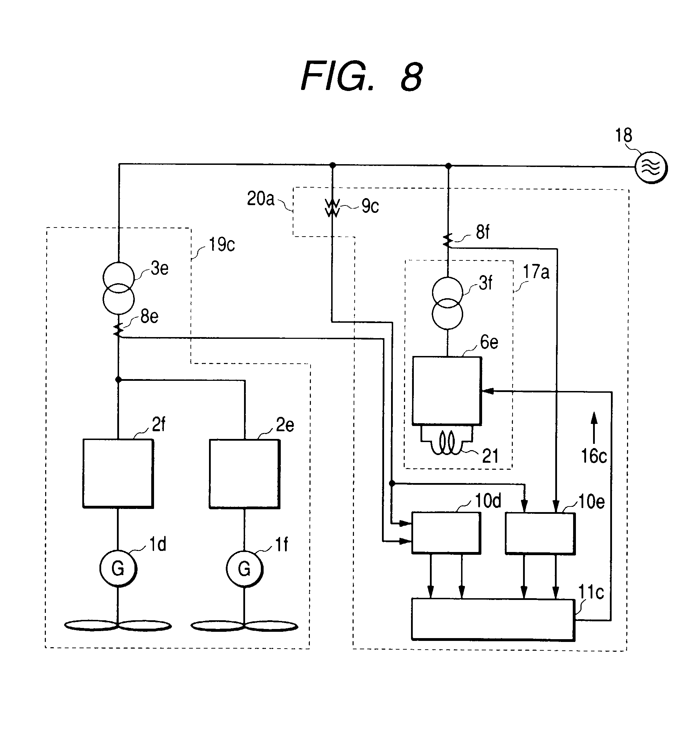

Fig. 8 is a modification example of the present invention in which a superconducting magnetic energy storage device 17a which absorbs or discharges an electric power is applied for the electric power energy storage device 4a in Fig. 1 embodiment. In Fig. 8, the superconducting magnetic energy storage device 17a is connected to the electric power system 18. Further, at the DC circuit portion of an electric power converter 6e a superconductor coil 21 is installed and the superconducting magnetic energy storage device 17a absorbs or discharges an electric power from and to the electric power system 18 according to a command from a control unit 11c.

The voltage of the electric power system 18 is detected by a voltage detector 9c and currents concerned are detected by current detectors 8e and 8f. Electric power detectors 10d and 10e compute electric powers according to the detected voltage and currents, and output the computed results to a control unit 11c. The control unit 11c outputs gate pulses 16c and controls the superconducting magnetic energy storage device 17a.

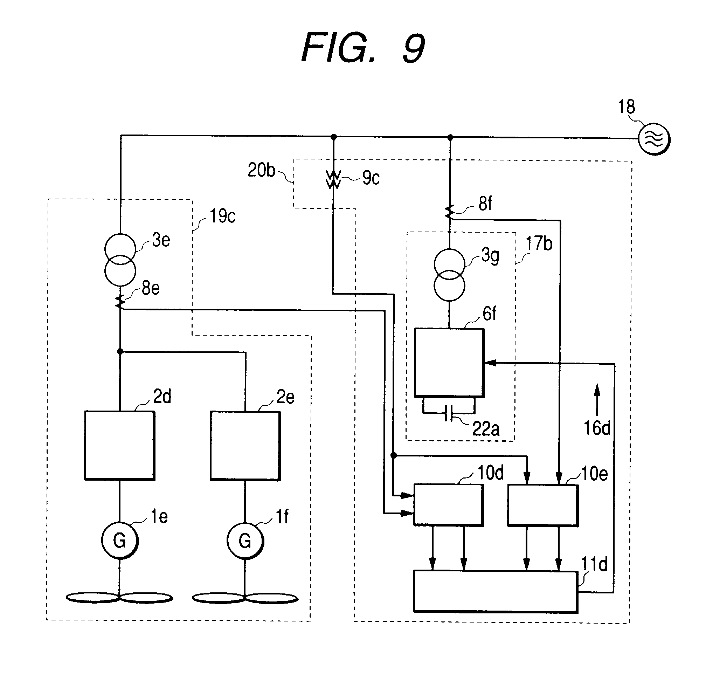

Other than the above superconducting magnetic energy storage device 17a, a static var compensating device (SVC) 17b as illustrated in Fig. 9 can be used. At the DC circuit portion of an electric power converter 6f in the static var compensating device 17b a capacitor 22a is installed, and the static var compensating device 17b absorbs or discharges an electric power from and to the electric power system 18 according to a command from a control unit 11d.

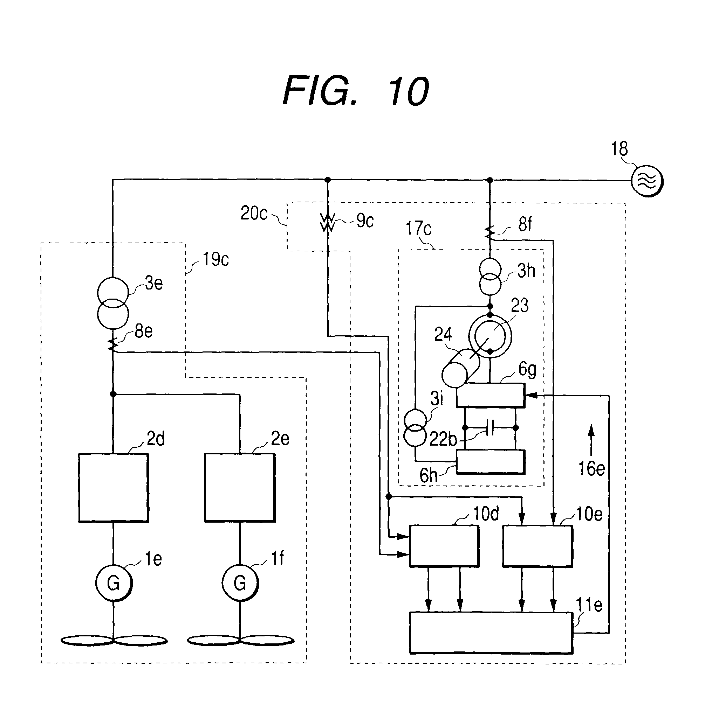

Further, in place of the superconducting magnetic energy storage device 17a, an adjustable speed electric power generating system can be used. As such adjustable speed electric power generating system a pumping up electric power generating installation and a fly-wheel type electric power generating system 17c as illustrated in Fig. 10 are exemplified. The fly-wheel type electric power generating system 17c charges a capacitor 22b through an electric power converter 6h, and another electric power converter 6g uses the electric power of the capacitor 22b for secondary excitation of a generator-motor 23. The rotatable shaft of the generator-motor 23 is coupled with a fly-wheel 24, and further the primary side of the generator-motor 23 is connected to the electric power system 18 via a transformer 3h. The present fly-wheel type electric power generating system 17c absorbs or discharges an electric power from and to the electric power system 18 according to a command from a control unit 11e.

Hereinabove, it has been explained that when an electric power energy storage system is provided in parallel with a plurality of wind power generating systems, varying components in the active electric power which will be outputted to an electric power system are suppressed. The present invention is likely applicable with regard to a reactive electric power.

As has been explained above, according to the present invention, when an electric power energy storage system is installed in parallel with a plurality of wind power generating systems, through provision for the electric power energy storage system of a function which absorbs or discharges high frequency components outputted from the wind power generators, the varying components in the active electric power outputted into an electric power system are suppressed and the electric power energy storage system can be stably operated with regard to charging and discharging thereby.

Further, since the electric power of not less than two wind power generators is determined according to the composite current thereof and the voltage of the electric power system, one set of detection system is sufficient regardless to the number of wind power generators, as well as when adding one or more wind power generators to the system, it is unnecessary to newly install another detection system, therefore, in the compound system of a wind power generating system and an electric power energy storage system number of detectors can be reduced which achieves cost reduction of the system.

Still further, because of the measure in which the low frequency pass filter output is subtracted from the detected value of the active electric power of the wind power generating system, the high frequency components in the active electric power flowing out into the electric power system are eliminated with a simple structure and the varying components in the active electric power which will be outputted into the electric power system can be suppressed.

Moreover, because of the provision of the switches in the control system, the mode of electric power detection can be exchanged, the active electric power of the compound system of a wind power generation and an electric power energy storage is caused to follow up the low frequency components of the wind power generating system to thereby compensate only the high frequency components thereof as well as the operating condition can be created which performs a compensating operation for all of the active electric power components of the wind power generating system.

Further, with regard to the reactive electric power components substantially the same compensation can be effected.

## Claims

1. An electric power variation compensating device in a compound system of a wind power generation and an electric power energy storage including a wind power generator and an electric power energy storage device and an electric power converting device provided in parallel therewith, characterized in that the electric power variation compensating device comprises means (8a) for detecting a composite current (Iw) of the wind power generator (1a, 1b); means (9a) for detecting a voltage (Vs) of an electric power system (18) to which the wind power generator (1a, 1b) and the electric power energy storage device (4a) and the electric power converting device (6a, 6b) are connected; and means (8b) for detecting a current (Ic) either inputted into or outputted from the electric power converting device (6a, 6b); wherein an output electric power (Pw, Qw) of the wind power generator (1a, 1b) is computed according to the detected voltage (Vs) of the electric power system (18) and the detected composite current value (Iw) as well as an input or output electric power (Pc, Qc) of the electric power converting device (6a, 6b) is computed according to the detected voltage (Vs) of the electric power system (18) and the detected current value (Ic) of the electric power converting device (4a), and the computed output electric power (Pw, Qw) of the wind power generator (1a, 1b) and the computed input or output electric power (Pc, Qc) of the electric power converting device (6a, 6b) are used as an electric power feed-back in a control system (11a) for the electric power converting device (6a, 6b).

2. An electric power variation compensating device in a compound system of a wind power generation and an electric power energy storage including a wind power generator and an electric power energy storage device and an electric power converting device provided in parallel therewith, characterized in that the electric power variation compensating device comprises means (8c) for detecting a composite current (Iw) of the wind power generator (1c, 1d); means (9b) for detecting a voltage (Vs) of an electric power system (18) to which the wind power generator (1c, 1d) and the electric power energy storage device (4b) and the electric power converting device (6c, 6d) are connected; and means (8d) for detecting a current in the electric power system (18); wherein an output electric power (Pw, Qw) of the wind power generator (1c, 1d) is computed according to the detected voltage (Vs) of the electric power system (18) and the detected composite current value (Iw) as well as an input or output electric power (Pc, Qc) of the electric power converting device (6c, 6d) is computed according to the detected voltage (Vs) of the electric power system (18) and the detected current value of the electric power system (18), and the computed output electric power (Pw, Qw) of the wind power generator (1c, 1d) and the computed input or output electric power (Pc, Qc) of the electric power converting device (6c, 6d) are used as an electric power feed-back in a control system (11b) for the electric power converting device (6c, 6d).

3. An electric power variation compensating device according to claim 1 or claim 2, characterized in that an amount of the electric power used for the electric power feed-back in the control system (11a, 11b) is a value (Pf, Qf) in which either the active electric power (Pw) or the reactive electric power (Qw) in the output electric power of the wind power generator (1a, 1b, 1c, 1d) each of which low frequency components (PwL) are excluded through a low frequency pass filter (12a, 12b) is added to either the active electric power (Pc) or the reactive electric power (Qc) in the input or output electric power of the electric power converting device (6a, 6b, 6c, 6d).

4. An electric power variation compensating device according to claim 3, characterized in that either the active electric power (Pc) or the reactive electric power (Qc) in the input or output electric power of the electric power converting device (6a, 6b, 6c, 6d) is determined by subtracting either the active electric power (Pw) or the reactive electric power (Qw) in the output electric power of the wind power generator (1a, 1b, 1c, 1d) from the electric power of the electric power system (18).

5. An electric power variation compensating device according to claim 3 or claim 4, characterized in that the electric power variation compensating device further comprises a change-over switch (A, B) which makes or interrupts the active electric power (Pw) or the reactive electric power (Qw) in the output power of the wind power generator (1a, 1b, 1c, 1d), and another change-over switch (C) which makes or interrupts low frequency components (PwL) of the active electric power (Pw) or the reactive electric power (Qw) in the output electric power of the wind power generator (1a, 1b, 1c, 1d).

6. An electric power variation compensating device according to one of claims 1 through 5, characterized in that a superconducting magnetic energy storage device (17a), a static var compensating device (17b) or an adjustable speed electric power generating system (17c) is used as the electric power energy storage device (4a, 4b).
